# EUROPEAN PATENT SPECIFICATION

(11) **EP 3 638 454 B1**
(45) Date of publication and mention of the grant of the patent: **25.05.2022**
(21) Application number: 18737764.3
(22) Date of filing: 14.06.2018
(51) Int. Cl.: B25B 13/48, B25B 13/06, B25B 23/00, B60B 29/00

(54) **APPARATUS FOR TIGHTENING THREADED FASTENERS**
VORRICHTUNG ZUM ANZIEHEN VON GEWINDEVERBINDUNGEN
APPAREIL DE SERRAGE D'ÉLÉMENTS DE FIXATION FILETÉS

(30) Priority: 14.06.2017 US 201762519231 P
(43) Date of publication of application: 22.04.2020
(73) Proprietor: Hytorc Division Unex Corporation, Mahwah, NJ 07430 (US)
(72) Inventor: BONAS, Calvin, A., Bronx NY 10454 (US); KOPPENHOEFER, Peter, Portland PA 18351 (US)
(74) Representative: Walther Bayer Faber Patentanwälte PartGmbB
(86) International application number: PCT/US2018/037462
(87) International publication number: WO 2018/232067

(56) References cited:
- WO-A1-2014/152708
- WO-A1-2017/004457
- GB-A- 2 535 647

## Description

### CROSS REFERENCE TO RELATED APPLICATIONS AND PATENTS. This

Application either claims priority to and/or is either a continuation patent application or a continuation-in-part application of the following commonly owned and/or copending patent application: U.S. Application Serial No. 62/519,231, having Filing Date of 14 June 2017, entitled "APPARATUS FOR TIGHTENING THREADED FASTENERS". Apparatuses for tightening threaded fasteners are also disclosed in GB 2 535 647 A disclosing the preamble of claim 1, WO 2017/004457 A1 and WO 2014/152 708 A1.

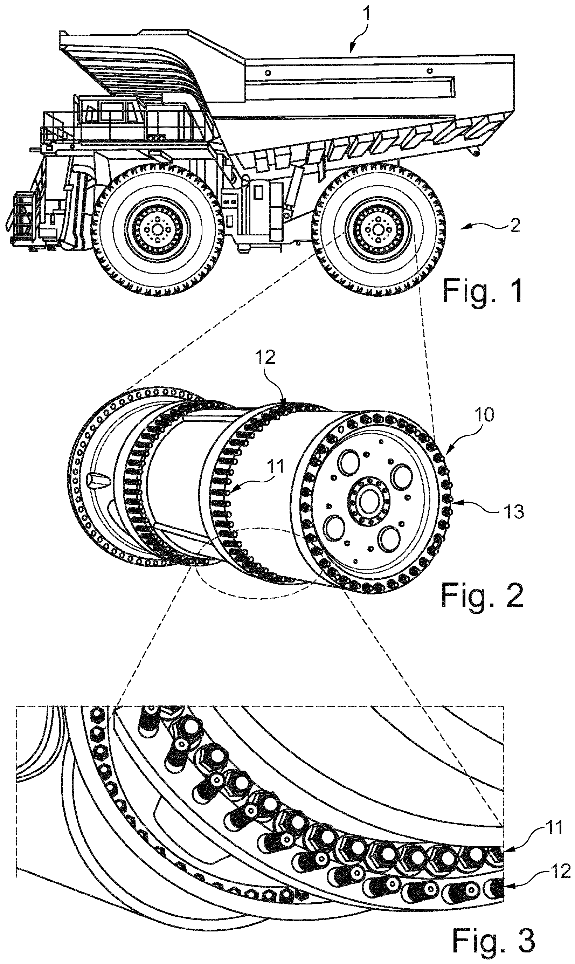

**BACKGROUND OF THE INVENTION.** Industrial bolting applications often include inaccessible fasteners. One such application is found on the Komatsu 980 Mining Truck 1 which includes rock service, tubeless, radial tires 2 having standard size of 59/80 R63 mounted on five piece flange rim assemblies 10, 1118 mm x 1600 mm x 140 mm (44" x 63" x 5.5") in size. Tires 2 are rated at 758 kPa (110 psi) cold inflation pressure. A typical total tire weight comes to 32585 kg (71,838 lbs)! See Rim assemblies 10 include an inner, lower circumferential array of inaccessible fasteners 11 each requiring 1800-1900 ft.lbs. (2440 - 2576 Nm) of torque, surrounded by an outer, higher circumferential array of fasteners 12. See FIGs. 1-3.

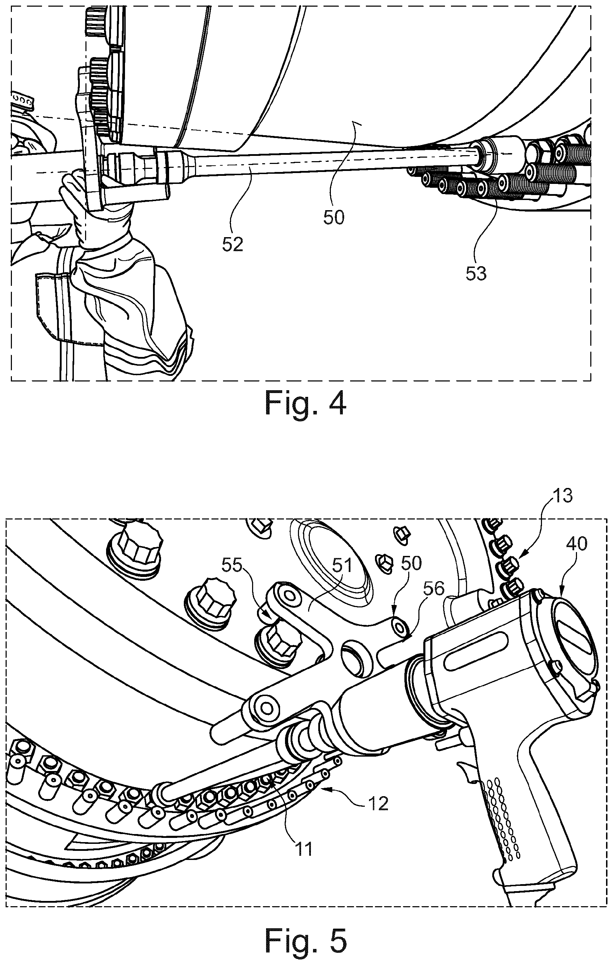

There is no room for conventional tooling to reach fasteners 11. A known tightening solution 50 requires use of a reaction fixture 51 shaped like a cross with a drive shaft extension 52. Known solution 50 reacts off of bolt heads on each side of reaction fixture 51 of a third circumferential array of fasteners 13 quite far from fasteners 11. This flawed solution puts excessive strain and side load on the system due to the positioning and angle ∠₅₀ of a socket 53, reaction fixture 51 and drive extension 52. Reaction points 55 and 56 are removed a distance H₅₀ from fasteners 11. Substantial risk of drive shaft extension 52, tool 40 and internal tool gearing failures and reaction fixture 51 slippages are characteristic of known solution 50. See FIGs. 4-5.

**SUMMARY OF INVENTION.** This application discloses an apparatus 100 for use with an electrically, hydraulically and/or pneumatically driven torque tool for tightening or loosening inaccessible threaded fasteners including a drive extension assembly 110, a reaction assembly 120 and a socket assembly 130. Advantageously the present invention uses an external reaction member which holds on to two (2) or four (4) adjacent studs while turning a fastener with an extended drive ball and socket joint connection. It more efficiently distributes/reduces the side loads and system strains from the reaction forces on the bolts by bringing the reaction point much closer to the fastener being turned. It allows for a plurality of fastener approach angles and is adaptable to a plurality of fastener obstructions. It's relatively lightweight, easy to maneuver from fastener to fastener and overall user friendly. Compared to known tightening solution 50, apparatus 100 is a stable, secure, solid and compact system with no twisting or tendency to creep or crawl of off the reaction points.

**BRIEF DESCRIPTION OF THE DRAWINGS.** FIG. 1 shows a side, perspective view of Komatsu 980 Mining Truck 1. FIG.2 shows a perspective view of five piece flange rim assemblies 10. FIG. 3 shows a perspective view of a portion of inner, lower circumferential array of inaccessible fasteners 11. FIGs. 5 and 6 show perspective views of known tightening solution 50. FIGs. 6A, 6B and 6C show perspective, bottom and cross-sectional views, respectively, of apparatus 100 of the present invention. FIG. 7 shows a perspective view of an apparatus 200 of the present invention.

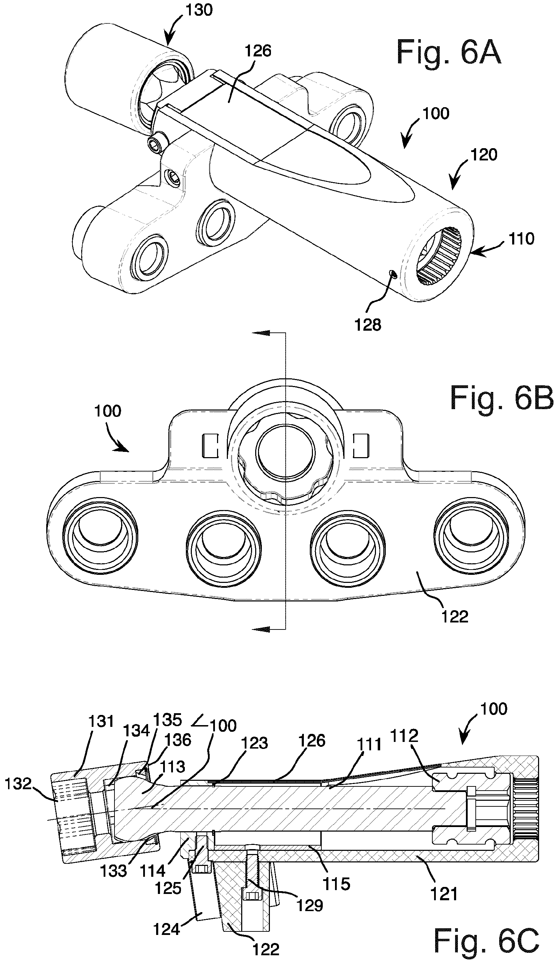

**DESCRIPTION.** Referring to FIGS. 6A, 6B and 6C, by way of example, apparatus 100 includes drive extension assembly 110, reaction assembly 120 and socket assembly 130. Drive extension assembly 110 may include a drive extension 111, a drive connector 112, a drive extension hex ball 113, a drive guide bushing 114 and a shroud support sleeve 115. Reaction assembly 120 may include a reaction tube 121, a reaction plate 122, an external retaining ring 123, thread protector sleeves 124, SHCS 125, a dirt shield 126, a SHCS 128 and SHCSs 129. Socket assembly 130 may include a flank drive socket 131, a fastener engagement means 132, a ball flex means 133, a ball engagement means 134, an inner socket retaining ring 135 and an outer socket retaining ring 136.

During operation, apparatus 100 is assembled and coupled to, for example, a HYTORC pneumatic torque multiplier (not shown). Components of drive extension assembly 110 are inserted into reaction tube 121. Specifically, drive extension 111 is connected to drive connector 112 at one end and hex ball 113 of drive extension 111 is connected to flank drive socket 131 at another end. These items are supported and kept concentric to the system via drive guide bushing 114 and shroud support sleeve 115. Flank drive socket 131 is attached to hex ball 113 by retaining rings 135 and 136.

Reaction plate 122 is coupled to reaction tube 111 via SHCSs 129 and transfers the tool's equal and opposite reaction force to a plurality of studs of outer, higher circumferential array of fasteners 12. Thread protector sleeves 124 of reaction plate 122 prevents marking or damage to the studs. Dirt shield 126, attached to reaction tube 111 and held in place by drive guide bushing 114, seals off components of the system to improve safety and reduce foreign matter from getting on the internal drive contents.

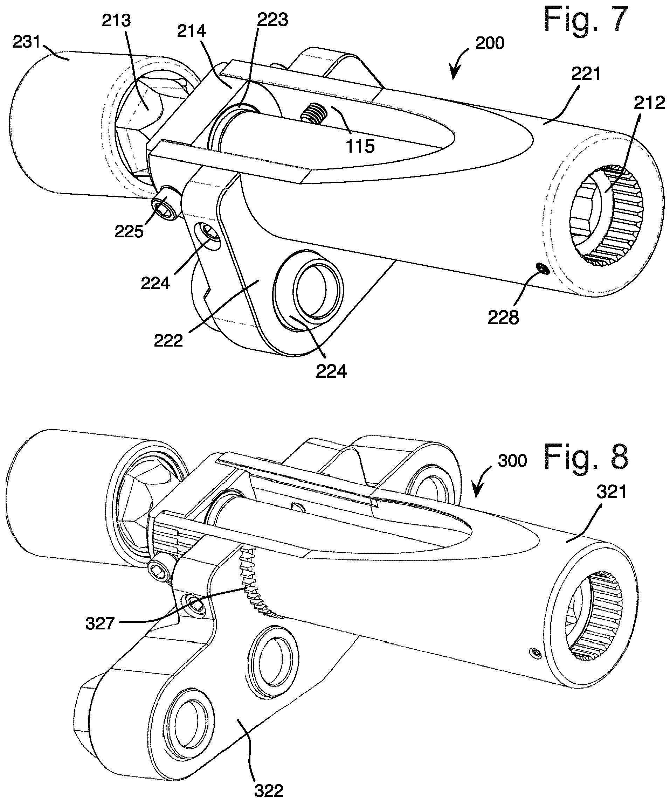

Another embodiment of the present invention is shown in FIG. 7. An apparatus 200 includes many of the same components as apparatus 100, evidenced by the similar numbering system. Notably, however, apparatus 200 reacts off of two (2) studs of outer, higher circumferential array of fasteners 12 rather than four (4) of them. Further, apparatus 200 does not include a dirt shield.

Another embodiment of the present invention is shown in FIG. 8. An apparatus 300 includes many of the same components as apparatus 100, evidenced by the similar numbering system. Notably, however, reaction plate 322 and reaction tube 321 are coupled via a spline connection means 327. Advantageously, spline connection means 327 allows for vertical displacement of reaction plate 322 and greater overall load support of apparatus 200. Further, apparatus 300 does not include a dirt shield.

## Claims

1. An apparatus (100) for use with an electrically, hydraulically and/or pneumatically driven torque tool for tightening, loosening or both tightening and loosening of threaded assembly fasteners including:
- a drive extension assembly (110);
- a reaction assembly (120); and
- a socket assembly (130);
**characterised in that**:
- the drive extension assembly (110) having a drive extension (111) formed between a drive connector (112) and a drive extension hex ball (113);
- the reaction assembly (120) having a reaction tube (121) and a reaction plate (122); and
- the socket assembly (130) having a drive socket (131) which accepts the fastener and the drive extension hex ball (113);
- the drive extension assembly (110) having a drive guide bushing (114) and a shroud support sleeve (115) to support and keep concentric the drive connector (112) and the drive extension (111) within the reaction tube (121);
- the reaction plate (122) having a plurality of reaction engagements for a plurality of nearby fasteners; and
- the socket assembly (130) having a fastener engagement means (132), a ball flex means (134) and a ball engagement means (134).

2. An apparatus (100) according to claim 1 including:
- the reaction assembly (120) having a retaining ring (123), protection sleeves (124) for the plurality of nearby fasteners and a dirt shield (126); and
- the socket assembly (130) having a plurality of retaining rings (135, 136).

3. An apparatus (100) according to claim 1 including two reaction engagements for two nearby fasteners.

4. An apparatus (100) according to claim 1 including four reaction engagements for four nearby fasteners.

5. An apparatus (100) according to claim 1 wherein the reaction tube (121) and the reaction plate (122) are coupled via a spline connection means (327).

6. An apparatus (100) according to claim 1 wherein coupling of the drive extension hex ball (113) and ball engagement means (134) allows for engagement of the fasteners at a plurality of angles.

7. An apparatus (100) according to claim 1 wherein the drive extension assembly (110) is substantially disposed inside the reaction assembly (120), and wherein the drive extension assembly (110) and the reaction assembly (120) are coupled together with a mechanism that allows such assemblies to be cooperatively and relatively rotated in opposite directions during operation.

8. An electrically, hydraulically and/or pneumatically driven torque tool for either tightening, loosening or both tightening and loosening of threaded fasteners including an apparatus (100) according to either claim 1-7.

9. A system for fastening objects including:
- a threaded fastener; and
- a tool according to claim 8.

## Patentansprüche

1. Vorrichtung (100) zur Verwendung mit einem elektrisch, hydraulisch und/oder pneumatisch angetriebenen Drehmomentschlüssel zum Anziehen und Lockern oder sowohl zum Anziehe als auch zum Lockern von Gewindemontagebefestigungslementen, umfassend:
- eine Antriebsverlängerungsanordnung (100),
- eine Reaktionsanordnung (120), und
- eine Aufnahmeanordnung (130),
**dadurch gekennzeichnet, dass**
- die Antriebsverlängerungsanordnung (100),eine zwischen einem Antriebsanschluss (112) und einer Antriebsverlängerungs-Sechskantkugel ausgebildete Antriebsverlängerung (111) aufweist,
- die Reaktionsanordnung (120) ein Reaktionsrohr (121) und eine Reaktionsplatte (122 aufweist, und
- die Aufnahmeanordnung (130) eine Antriebsaufnahme (131) aufweist, die das Befestigungslement und die Antriebsverlängerungs-Sechskantkugel (113) aufnimmt,
- die Antriebsverlängerungsanordnung (110) eine Antriebsführungsaufnahme (114) und eine Umhüllungstragehülse (115) zum Tragen und Konzentrisch-Halten des Antriebsanschlusses (112) und der Antriebsverlängerung (111) innerhalb des Reaktionsrohrs (121) aufweist,
- die Reaktionsplatte (122) mehrere Reaktionseingriffsmittel für mehrere in der Nähe liegende Befestigungsmittel aufweist und
- die Aufnahmeanordnung (130) ein Befestigungsmittel-Eingriffsmittel (132), ein Kugelbiegemittel (134) sowie ein Kugeleingriffsmittel (134) aufweist.

2. Vorrichtung (100) nach Anspruch 1, umfassend:
- die Reaktionsanordnung (120) weist einen Haltering (123), Schutzhülsen (124) für die mehreren in der Nähe liegenden Befestigungsmittel sowie ein Schmutzschild (126) auf, und
- die Aufnahmeanordnung (130) weist mehrere Halteringe (135, 136) auf.

3. Vorrichtung (100) nach Anspruch 1, umfassend zwei Reaktionseingriffselemente für zwei in der Nähe liegende Befestigungsmittel.

4. Vorrichtung (100) nach Anspruch 1, umfassend vier Reaktionseingriffselemente für vier in der Nähe liegende Befestigungsmittel.

5. Vorrichtung (100) nach Anspruch 1, wobei das Reaktionsrohr (121) und die Reaktionsplatte (122) über ein Splineverbindungsmittel (327) gekoppelt sind.

6. Vorrichtung (100) nach Anspruch 1, wobei die Kupplung der Antriebsverlängerungs-Sechskantkugel (113) und des Eingriffsmittels (114) ein Eingreifen der Befestigungsmittel in mehreren Winkeln zulässt.

7. Vorrichtung (100) nach Anspruch 1, wobei die Antriebsverlängerungsanordnung (110) im Wesentlichen innerhalb der Reaktionsanordnung (120) liegt und wobei die Antriebsverlängerungsanordnung (110) und die Reaktionsanordnung (120) zusammen mit einem Mechanismus gekoppelt sind, der eine gegenläufige gemeinsame und relative Rotation dieser Anordnungen im Betrieb zulässt.

8. Elektrisch, hydraulisch und/oder pneumatisch angetriebener Drehomentschlüssel entweder zum Anziehen, zum Lockern oder sowohl zum Anziehen als auch zum Lockern von Gewindebefestigungsmitteln, umfassend eine Vorrichtung (100) nach einem der Ansprüche 1 - 7.

9. System zum Befestigen von Gegenständen, umfassend:
- ein Gewindebefestigungsmittel und
-- ein Werkzeug nach Anspruch 8.

## Revendications

1. Appareil (100) destiné à être utilisé avec un outil d'application de couple à entraînement électrique, hydraulique et/ou pneumatique pour serrer, desserrer ou aussi bien serrer que desserrer des éléments de fixation pour assemblage à vis, comportant :
- un ensemble d'extension d'entraînement (110) ;
- un ensemble de réaction (120) ; et
- un ensemble douille (130) ;
**caractérisé en ce que** :
- l'ensemble d'extension d'entraînement (110) présente une extension d'entraînement (111) formée entre un connecteur d'entraînement (112) et une boule six pans d'extension d'entraînement (113) ;
- l'ensemble de réaction (120) présente un tube de réaction (121) et une plaque de réaction (122) ; et
- l'ensemble douille (130) présente une douille d'entraînement (131) qui reçoit l'élément de fixation et la boule six pans d'extension d'entraînement (113) ;
- l'ensemble d'extension d'entraînement (110) présente une bague de guidage d'entraînement (114) et un manchon de support protecteur (115) pour supporter et maintenir concentriques le connecteur d'entraînement (112) et l'extension d'entraînement (111) dans le tube de réaction (121) ;
- la plaque de réaction (122) présente une pluralité d'éléments de mise en prise de réaction pour une pluralité d'éléments de fixation avoisinants ; et
- l'ensemble douille (130) présente un moyen de mise en prise d'élément de fixation (132), un moyen de fléchissement de boule (134) et un moyen de mise en prise de boule (134).

2. Appareil (1) selon la revendication 1, comportant :
- l'ensemble de réaction (120) présentant un anneau de retenue (123), des manchons de protection (124) pour la pluralité d'éléments de fixation avoisinants et une protection antisalissure (126) ; et
- l'ensemble douille (130) présentant une pluralité d'anneaux de retenue (135, 136).

3. Appareil (100) selon la revendication 1, comportant deux éléments de mise en prise de réaction pour deux éléments de fixation avoisinants.

4. Appareil (100) selon la revendication 1, comportant quatre éléments de mise en prise de réaction pour quatre éléments de fixation avoisinants.

5. Appareil (100) selon la revendication 1, dans lequel le tube de réaction (121) et la plaque de réaction (122) sont couplés par le biais d'un moyen de liaison à cannelure (327).

6. Appareil (100) selon la revendication 1, dans lequel le couplage de la boule six pans d'extension d'entraînement (113) et du moyen de mise en prise de boule (134) permet la mise en prise des éléments de fixation avec une pluralité d'angles.

7. Appareil (100) selon la revendication 1, dans lequel l'ensemble d'extension d'entraînement (110) est sensiblement disposé à l'intérieur de l'ensemble de réaction (120), et dans lequel l'ensemble d'extension d'entraînement (110) et l'ensemble de réaction (120) sont couplés ensemble avec un mécanisme qui permet à de tels ensembles d'être tournés de manière coopérative et relative dans des directions opposées pendant le fonctionnement.

8. Outil d'application de couple à entraînement électrique, hydraulique et/ou pneumatique pour serrer ou desserrer ou aussi bien serrer que desserrer des éléments de fixation filetés, comportant un appareil (100) selon l'une quelconque des revendications 1 à 7.

9. Système de fixation d'objets comportant :
- un élément de fixation fileté ; et
- un outil selon la revendication 8.
